# EUROPÄISCHE PATENTSCHRIFT

(11) **EP 1 362 472 B1**
(45) Veröffentlichungstag und Bekanntmachung des Hinweises auf die Patenterteilung: **05.03.2008**
(21) Anmeldenummer: 02706653.9
(22) Anmeldetag: 30.01.2002
(51) Int. Cl.: H04M 3/48, H04M 7/00

(54) **VERFAHREN FÜR EINEN AUTOMATISCHEN RÜCKRUF IN EINEM PAKETORIENTIERTEN NETZWERK**
AUTOMATIC CALL-BACK METHOD FOR A PACKET ORIENTATED NETWORK
PROCEDE DE RAPPEL AUTOMATIQUE MIS EN OEUVRE DANS UN RESEAU DE TRANSMISSION PAR PAQUETS

(30) Priorität: 19.02.2001 DE 10107701
(43) Veröffentlichungstag der Anmeldung: 19.11.2003
(73) Patentinhaber: Siemens Enterprise Communications GmbH & Co. KG, 81379 München (DE)
(72) Erfinder: KLAGHOFER, Karl, 81373 München (DE); HORVATH, Ernst, A-1060 Wien (AT)
(74) Vertreter: Maier, Daniel Oliver
(86) Internationale Anmeldenummer: PCT/DE2002/000324
(87) Internationale Veröffentlichungsnummer: WO 2002/067560

(56) Entgegenhaltungen:
- WO-A-00/78001
- WO-A-99/08434
- US-A- 5 794 143

## Beschreibung

Aus der Produktschrift "Sonderausgabe telcom report und Siemens Magazin Com: ISDN im Büro - HICOM", Siemens AG, Berlin und München, 1985, insbesondere der Seiten 14 bis 31 ist eine für eine Informationsvermittlung, insbesondere Sprachdatenvermittlung ausgebildete Kommunikationsanlage bekannt, die eine Vielzahl von Leistungsmerkmalen, wie z.B. Automatischer Rückruf, Anrufübernahme, Rufumleitung, usw., unterstützt. Des weiteren ist es aus der Produktschrift der Firma Siemens AG "HICOM 300 Networking", 1991, Bestellnummer A31001-W-A30 bekannt, Kommunikationsanlagen zu einem - in der Regel privaten - Kommunikationsnetz zusammenzuschalten und lokal an einer Kommunikationsanlage verfügbare Leistungsmerkmale netzweit zur Verfügung zu stellen. Eine netzweite Realisierung der Leistungsmerkmale erfolgt dabei üblicherweise mittels eines kommunikationsanlagen-spezifischen, auf einem zeitschlitz-orientierten Übertragungsprotokoll basierenden Vernetzungsprotokoll.

Jeder Teilnehmer eines Kommunikationssystems hat dabei die Möglichkeit Leistungsmerkmale, wie z.B. einen Automatischen Rückruf, netzweit zu aktivieren bzw. zu deaktivieren. Dabei wählt der Teilnehmer beispielsweise eine leistungsmerkmalsspezifische Servicekennzahl und die Rufnummer desjenigen Endgerätes, für welches das jeweilige Leistungsmerkmal zu aktivieren bzw. zu deaktivieren ist.

Die ITU-T (International Telecommunication Union) Recommendation H.450.9 beschreibt ein Verfahren für eine Realisierung des bekannten Leistungsmerkmals "Automatischer Rückruf" in paket-orientierten Netzwerk nach dem Standard H.323. Hierbei werden - analog zu zeitschlitz-orientierten Kommunikationsnetzen - zwei unterschiedliche Fälle unterschieden:
1) Automatischer Rückruf bei Zielteilnehmer "Besetzt" (CCBS) und
2) Automatischer Rückruf bei Zielteilnehmer "Frei" (CCNR).

Beide Varianten erfordern, dass die Teilnehmer über ihre jeweiligen Endgeräte am Netzwerk registriert sind. Neben den beiden Zuständen "Besetzt" und "Frei" existiert in paket-orientierten Netzwerken nach dem Internet Protokoll - kurz IP - ein weiterer Zustand, in dem der Teilnehmer weder "Besetzt" noch "Frei" sondern "Nicht Registriert" ist. Dies ist beispielsweise der Fall, wenn eine auf dem entsprechenden Endgerät implementierte Applikation nicht gestartet oder das Endgerät nicht aktiv ist.

Aus der WO 99/08434 A ist ein System zur Ermittlung und weitergehenden Verarbeitung von Telefonleitungszuständen - insbesondere zur Durchführung eines Rufaufbaus - bekannt. Als derartige Telefonleitungszustände sind beispielsweise "Besetzt", "Frei" und spezifischere Zustände wie "Frei für Anrufe an folgende Liste von Teilnehmern ..." vorgesehen.

Der vorliegenden Erfindung liegt die Aufgabe zugrunde, ein Verfahren anzugeben, durch welches das Leistungsmerkmal "Automatischer Rückruf" in paket-orientierten Netzwerken auch in Fällen ausgeführt werden kann, in denen ein gerufener Teilnehmer am Netzwerk "Nicht Registriert" ist.

Die Lösung dieser Aufgabe erfolgt erfindungsgemäß mit den Merkmalen des Patentanspruchs 1 bzw. des Patentanspruchs 2.

Für den Fall, dass ein gerufener Teilnehmer - bzw. das dem gerufenen Teilnehmer zugeordnete Endgerät - nicht am paket-orientierten Netzwerk registriert ist, bzw. übernimmt erfindungsgemäß eine Stellvertretereinrichtung - in der Literatur häufig als Proxy bezeichnet - die Funktionen des gerufenen Endgerätes. Die Stellvertretereinrichtung ist dabei in der Regel als eine entsprechende Funktion in einer Datenverarbeitungseinrichtung implementiert. Die Stellvertretereinrichtung ermöglicht dem rufenden Teilnehmer einen Automatischen Rückrufauftrag gegenüber dem gerufenen Teilnehmer zu beantragen. Sobald sich der gerufene Teilnehmer von einem Endgerät aus am paket-orientierten Netzwerk anmeldet, wird der Rückrufauftrag an dieses Endgerät übermittelt und steht somit zur Ausführung des Automatischen Rückrufes bereit.

In Fällen, in denen der gerufene Teilnehmer - bzw. das dem gerufenen Teilnehmer zugeordnete Endgerät - zum Zeitpunkt der Aktivierung eines Rückrufauftrages durch den rufenden Teilnehmer am Netzwerk registriert ist, sich jedoch vor einer Ausführung des Rückrufes am Netzwerk abmeldet, wird der Rückrufauftrag automatisch im Netzwerk (IP-N) gespeichert. Sobald sich der gerufene Teilnehmer am Netzwerk neu registriert wird der Rückrufauftrag an den gerufenen Teilnehmer übermittelt und durch diesen ausgeführt.

Ein wesentlicher Vorteil des erfindungsgemäßen Verfahrens besteht darin, dass das Verfahren auf einfache Weise in bereits bestehende Systeme implementiert werden kann.

Ein weiterer Vorteil des erfindungsgemäßen Verfahrens besteht darin, dass sich der gerufene Teilnehmer von einem beliebigen Endgerät des paket-orientierten Netzwerks aus registrieren kann, wobei der Rückrufauftrag an dasjenige Endgerät übermittelt wird, an dem sich der gerufene Teilnehmer registriert hat, so dass auf einfache Weise eine für die Teilnehmer gewünschte Mobilität gewährleistet werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, dass durch ein Löschen von Rückrufaufträgen nach Ablauf einer vorgebbaren Zeitspanne alte und somit in der Regel nicht mehr aktuelle Aufträge automatisch aus dem System entfernt werden, wodurch die durch eine Überwachung der Rückrufaufträge entstehende Belastung des Systems so gering wie möglich gehalten wird.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten; und
- Fig. 2:: ein Ablaufdiagramm zur Veranschaulichung der beim erfindungsgemäßen Verfahren ablaufenden wesentlichen Verfahrensschritte.

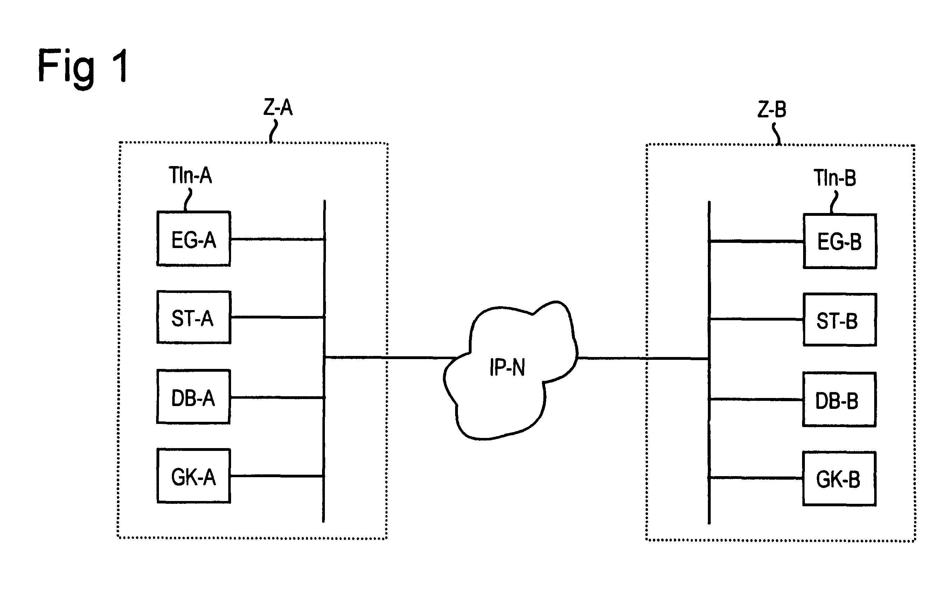

Fig. 1 zeigt eine erste und eine zweite Zone Z-A, Z-B die über ein paket-orientiertes Netzwerk IP-N - beispielsweise ein Local Area Network (kurz LAN) - miteinander verbunden sind. Eine Datenübermittlung zwischen den Zonen Z-A, Z-B über das paket-orientierte Netzwerk IP-N erfolgt mittels den an sich bekannten Standards H.323 und H.225 der ITU (International Telecommunication Union).

Eine Zone Z-A, Z-B umfaßt jeweils einen sogenannten Gatekeeper GK-A, GK-B und eine Mehrzahl von diesem Gatekeeper GK-A, GK-B zugeordneten Einrichtungen. Beispielhaft ist für jede Zone Z-A, Z-B ein einem Teilnehmer Tln-A, Tln-B zugeordnetes Endgerät EG-A, EG-B, eine Stellvertretereinrichtung ST-A, ST-B und eine Datenbasis DB-A, DB-B dargestellt. Mehrere Zonen werden wiederum zu einer sogenannten - nicht dargestellten - Domäne zusammengefaßt. Ein Endgerät EG-A, EG-B ist beispielsweise ein sogenanntes 'IP-Phone' oder ein 'Personal Computer' mit einer entsprechenden, auf dem Personal Computer ablaufenden Applikation.

Einer Zone Z-A, Z-B sind in der Regel mehrere Endgeräte zugeordnet, wobei die Stellvertretereinrichtung ST-A, ST-B, die Datenbasis DB-A, DB-B und der Gatekeeper GK-A, GK-B den Endgeräten in diesem Fall gemeinsam zugeordnet sind. Die Stellvertretereinrichtung ST-A, ST-B, die Datenbasis DB-A, DB-B und der Gatekeeper GK-A, GK-B einer Zone Z-A, Z-B können sowohl separate Einrichtungen aber auch in einer Einrichtung zusammengefaßte Einheiten sein. Durch den Gatekeeper GK-A, GK-B einer Zone Z-A, Z-B erfolgt im wesentlichen eine Registrierung der ihm zugeordneten Einrichtungen und eine bidirektionale Adreßumsetzung zwischen innerhalb einer Zone Z-A, Z-B verwendeter sogenannter Alias-Adressen und denjenigen Adressen, die das paket-orientierte Netzwerk IP-N für einen Verbindungsaufbau benötigt. Eine Alias-Adresse ist dabei beispielsweise eine von einem Teilnehmer Tln-A, Tln-B für den Verbindungsaufbau verwendete Telefonnummer oder E-Mail-Adresse.

Im vorliegenden Ausführungsbeispiel sind die den Teilnehmern Tln-A, Tln-B zugeordneten Endgeräte EG-A, EG-B jeweils unterschiedlichen Zonen Z-A, Z-B zugeordnet. Die Teilnehmer Tln-A, Tln-B bzw. die Endgeräte EG-A, EG-B können jedoch auch einer gemeinsamen Zone Z-A, Z-B oder einer gemeinsamen Domäne zugeordnet sein.

Im vorliegenden Ausführungsbeispiel der Erfindung wird ein Verbindungsaufbau ausgehend von einem am ersten Gatekeeper GK-A der ersten Zone D-A registrierten ersten Teilnehmer Tln-A zu einem zweiten Teilnehmer Tln-B der zweiten Zone Z-B initialisiert. Es kann sich bei diesem Verbindungsaufbau um eine Sprach-, eine Video- oder eine Multimediaverbindung handeln. Dem Ausführungsbeispiel ist die Annahme zu Grunde gelegt, dass alle Rufe an den zweiten Teilnehmer Tln-B über den zweiten Gatekeeper GK-B geführt werden. Ob die Rufe von bzw. an den ersten Teilnehmer Tln-A über den ersten Gatekeeper GK-A geführt werden oder nicht ist für dieses Ausführungsbeispiel ohne Bedeutung.

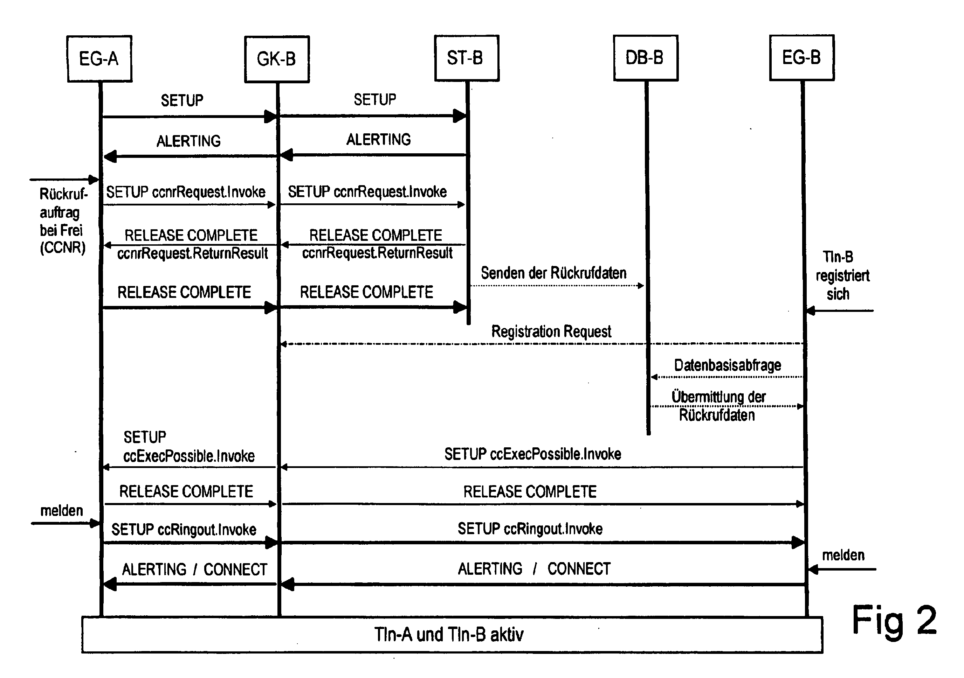

Fig. 2 zeigt ein Ablaufdiagramm zur Veranschaulichung der beim erfindungsgemäßen Verfahren ausgetauschten wesentlichen Nachrichten. Hierbei repräsentieren die durchgezogenen dicken Pfeile eine Verbindungsaufbau-Nachricht zum Aufbau einer Verbindung mit einem Nutzdatenkanal, die durchgezogenen dünnen Pfeile eine Signalisierungs-Nachricht, die Strich-Punkt-Pfeile eine Nachricht gemäß dem bekannten Protokoll H.225.0 RAS der ITU und die gepunkteten Pfeile eine Datenbasisprotokoll-Nachricht.

Im vorliegenden Ausführungsbeispiel sendet das erste Endgerät EG-A eine Verbindungsaufbau-Nachricht "SETUP" gemäß dem Standard H.323 an den zweiten Gatekeeper GK-B. Alternativ kann das erste Endgerät EG-A die Verbindungsaufbau-Nachricht "SETUP" auch an den ersten Gatekeeper GK-A übermitteln, der die Verbindungsaufbau-Nachricht "SETUP" an den zweiten Gatekeeper GK-B weiterleitet. Der zweite Gatekeeper GK-B stellt fest, ob der zweite Teilnehmer Tln-B aktuell am zweiten Gatekeeper GK-B registriert ist. Ist dies nicht der Fall, leitet der zweite Gatekeeper GK-B die empfangene Verbindungsaufbau-Nachricht "SETUP" an die zweite Stellvertretereinrichtung ST-B weiter. Die zweite Stellvertretereinrichtung ST-B agiert nun als Stellvertreter für das zweite Endgerät EG-B und sendet eine Nachricht "ALERTING" gemäß dem Standard H.225.0 zurück an das erste Endgerät EG-A.

Mit dem Empfang der Nachricht "ALERTING" wird das erste Endgerät EG-A in einen Zustand versetzt, in dem es möglich ist am ersten Endgerät EG-A das Leistungsmerkmal "Automatischer Rückruf bei Frei" nach dem Standard H.450.9 einzuleiten. Hierzu wird zwischen dem ersten Endgerät EG-A und dem zweiten Gatekeeper GK-B eine neue Signalisierungsverbindung aufgebaut, welche die H.450.9 Operation "ccnrRequest.Invoke" in einer Signalisierungs-Nachricht "SETUP" gemäß dem Standard H.225.0 beinhaltet. Diese Signalisierungs-Nachricht "SETUP" wird wie zuvor vom zweiten Gatekeeper GK-B an die zweite Stellvertretereinrichtung ST-B weitergeleitet. Die Operation "ccnrRequest. Invoke" beinhaltet die Rufnummer des ersten Teilnehmers Tln-A, die Rufnummer des zweiten Teilnehmers Tln-B und optional einen Rückrufidentifier und Information über den gewünschten Servicetyp (Sprache, Video, Multimedia,...). Diese Daten werden im folgenden zusammen als Rückrufdaten bezeichnet.

Die zweite Stellvertretereinrichtung ST-B akzeptiert den Rückrufauftrag des ersten Teilnehmers Tln-A und sendet eine Quittungsmeldung "RELEASE COMPLETE" gemäß dem Standard H.225.0 zusammen mit einer Operation "ccnrRequest.Return-Result" gemäß dem Standard H.450.9 zurück an das erste Endgerät EG-A. Nach Empfang der Quittungsmeldung "RELEASE COMPLETE" löst das erste Endgerät EG-A die noch existierende im Alerting-Zustand befindliche Verbindung des ursprünglichen Verbindungsaufbaus mit der Nachricht "RELEASE COMPLETE" gemäß dem Standard H.225.0 aus.

In einem nächsten Schritt übermittelt die zweite Stellvertretereinrichtung ST-B die Rückrufdaten an die zweite Datenbasis DB-B, in der die Rückrufdaten zwischengespeichert werden. Die zweite Datenbasis DB-B kann physikalisch auf der selben Einrichtung angeordnet sein, auf der auch die zweite Stellvertretereinrichtung ST-B implementiert ist. Als Schnittstelle und Protokoll zwischen der zweiten Stellvertretereinrichtung ST-B und der zweiten Datenbasis DB-B kann ein beliebiges Datenbasis-Protokoll, wie z.B. ODBC, JDBC, XML,..., verwendet werden.

Registriert sich der zweite Teilnehmer Tln-B innerhalb einer vorgebbaren Zeitspanne - beispielsweise innerhalb von 24 Stunden - am zweiten Gatekeeper GK-B kommt es zu einer Kommunikation zwischen dem zweiten Endgerät EG-B und der zweiten Datenbasis DB-B. Eine Überwachung der Zeitspanne kann beispielsweise durch einen sogenannten "SS-CC service duration timer" nach Standard H.450.9 im ersten Endgerät EG-A erfolgen. Die zweite Datenbasis DB-B übermittelt daraufhin neben anderen Informationen - beispielsweise des Benutzerprofils - auch Informationen über ausstehende Rückrufe, d.h. die Rückrufdaten, an das zweite Endgerät EG-B.

Das zweite Endgerät EG-B ist nun in der Lage die Rückruf-Prozedur nach Standard H.450.9 auszuführen. Dies erfolgt in vorliegenden Ausführungsbeispiel durch das Senden einer Verfügbarkeits-Operation "ccExecPossible. Invoke" als Teil einer Signalisierungs-Nachricht "SETUP" gemäß dem Standard H.225.0 zum ersten Endgerät EG-A. Im vorliegenden Ausführungsbeispiel wird davon ausgegangen; dass alle Rufe an bzw. vom zweiten Teilnehmer Tln-B über den zweiten Gatekeeper GK-B geführt werden. Das erste Endgerät EG-A ist im vorliegenden Ausführungsbeispiel am ersten Gatekeeper GK-A registriert und im Zustand "Frei". Der erste Teilnehmer Tln-A wird lokal vom ersten Endgerät EG-A gerufen und die Signalisierungsverbindung zwischen dem ersten Endgerät EG-A und dem zweiten Endgerät EG-B wird vom ersten Endgerät EG-A aus durch die Signalisierungs-Nachricht "RELEASE COMPLETE" ausgelöst.

Meldet sich der erste Teilnehmer Tln-A so kommt es zum eigentlichen "Automatischen Rückruf" vom ersten Endgerät EG-A zum zweiten Endgerät EG-B in Form eines Verbindungsaufbaus nach den Standards H.323 und H.450.9 mittels einer Verbindungsaufbau-Nachricht "SETUP", welche eine H.450.9 Operation "ccRingout.Invoke" beinhaltet. Meldet sich der zweite Teilnehmer Tln-B, so werden Verbindungsaufbau-Nachrichten "ALERTING" und "CONNECT" nach dem Standard H.225.0 vom zweiten Endgerät EG-B aus an das erste Endgerät EG-A übermittelt. Die Verbindungsaufbau-Nachrichten "SETUP, "ALERTING" und CONNECT" enthalten - nicht dargestellte - Informationen, die benötigt werden um die Nutzdatenkanäle nach Standard H.323 aufzubauen.

Die Übermittlung der Rückrufdaten durch die zweite Stellvertretereinrichtung ST-B an eine zweite Datenbasis DB-B ermöglicht, dass sich der zweite Teilnehmer Tln-B von jedem beliebigen Endgerät aus am zweiten Gatekeeper GK-B registrieren kann und der Rückruf trotzdem zur weiteren Ausführung gelangen kann. Dies wird ermöglicht durch das Übermitteln der in der zweiten Datenbasis DB-B gespeicherten Rückrufdaten an dasjenige Endgerät, an dem sich der zweite Teilnehmer Tln-B registriert. Somit erfüllt das erfindungsgemäße Verfahren auch eine gewünschte Mobilität für die Teilnehmer Tln-A, Tln-B.

Gemäß einer weiteren Ausgestaltung der Erfindung ist der zweite Teilnehmer Tln-B zum Zeitpunkt der Aktivierung des Rückrufauftrages durch den ersten Teilnehmer Tln-A am zweiten Gatekeeper GK-B registriert. In diesem Fall werden die Rückrufdaten gemäß dem Standard H.450.9 nicht in der zweiten Stellvertretereinrichtung ST-B, sondern im zweiten Endgerät EG-B gespeichert. Kommt es jedoch infolge eines Abmelden des zweiten Teilnehmers Tln-B am zweiten Gatekeeper GK-B nicht mehr zur Ausführung des Rückrufes, werden die Rückrufdaten ausgehend vom zweiten Endgerät EG-B an die zweite Datenbasis DB-B übermittelt. Zum Zeitpunkt des erneuten Registrierens des zweiten Teilnehmers Tln-B am zweiten Gatekeeper GK-B werden die Rückrufdaten erneut an dasjenige Endgerät übermittelt über das sich der zweite Teilnehmer Tln-B aktuell registriert hat und der "Automatische Rückruf" wird wie bereits oben beschrieben ausgeführt.

Gemäß noch einer weiteren Ausgestaltung der Erfindung ist der erste Teilnehmer Tln-A zum Zeitpunkt der Rückrufausführung nicht am ersten Gatekeeper GK-A registriert. Ist dies der Fall, übernimmt die erste Stellvertretereinrichtung ST-A der ersten Domäne D-A zusammen mit der ersten Datenbasis DB-A die Funktionen des ersten Endgerätes EG-A.

Dabei antwortet die erste Stellvertretereinrichtung ST-A auf die Verfügbarkeits-Operation "ccExecPossible.Invoke" des zweiten Endgerätes EG-B anstelle des ersten Endgerätes EG-A mit der Operation "ccSuspend.Invoke" gemäß Standard H.450.9.

Bei einer erneuten Registrierung des ersten Teilnehmers Tln-A am ersten Gatekeeper GK-A, wird der ursprüngliche Rückrufauftrag - mittels einer Operation "ccResume.Invoke" - wieder aktiviert. Hierbei besteht die Möglichkeit den ersten Teilnehmer Tln-A vor einer Ausführung des Rückrufes zu befragen, ob der Rückruf noch gewünscht wird. Die Stellvertretereinrichtung ST-A übernimmt beim Abmelden des ersten Teilnehmers Tln-A auch die Rückruf-Zeitüberwachung vom ersten Endgerät EG-A und löscht bei Überschreitung der vorgebbaren Zeitspanne den Rückrufauftrag mittels einer Operation "ccCancel.Invoke" gemäß Standard H.450.9.

Das erfindungsgemäße Verfahren ist in den obigen Ausführungsbeispielen auf H.323 Kommunikationsnetze bezogen. Das Verfahren ist jedoch auch in anderen Kommunikationsnetzen, beispielsweise in sogenannten SIP-Kommunikationsnetzen, einsetzbar.

## Patentansprüche

1. Verfahren für einen automatischen Rückruf in einem paket-orientierten Netzwerk (IP-N),
bei dem in Fällen, in denen ein gerufener Teilnehmer (Tln-B) nicht am Netzwerk (IP-N) registriert ist, ein Rückrufauftrag vom rufenden Teilnehmer (Tln-A) automatisch an eine im Netzwerk (IP-N) angeordnete, dem gerufenen Teilnehmer (Tln-B) zugeordnete Stellvertretereinrichtung (ST-B) übermittelt und von dieser gespeichert wird, und
bei dem sobald sich der gerufene Teilnehmer (Tln-B) am Netzwerk (IP-N) registriert der Rückrufauftrag an den gerufenen Teilnehmer (Tln-B) übermittelt und durch diesen ausgeführt wird.

2. Verfahren für einen automatischen Rückruf in einem paket-orientierten Netzwerk (IP-N),
bei dem in Fällen, in denen ein gerufener Teilnehmer (Tln-B) zum Zeitpunkt einer Aktivierung eines Rückrufauftrages durch einen rufenden Teilnehmer (Tln-A) am Netzwerk (IP-N) registriert ist, sich jedoch vor einer Ausführung des Rückrufes am Netzwerk (IP-N) abmeldet, der Rückrufauftrag automatisch im Netzwerk (IP-N) gespeichert wird, und
bei dem sobald sich der gerufene Teilnehmer (Tln-B) am Netzwerk (IP-N) registriert der Rückrufauftrag an den gerufenen Teilnehmer (Tln-B) übermittelt und durch diesen ausgeführt wird.

3. Verfahren nach Anspruch 1 oder 2,
**dadurch gekennzeichnet,**
**dass** der Rückrufauftrag in einer separaten Datenbasis (DB-B) gespeichert und von dieser an den gerufenen Teilnehmer (Tln-B) übermittelt wird.

4. Verfahren nach einem der Ansprüche 1 bis 3,
**dadurch gekennzeichnet,**
**dass** der Rückrufauftrag nach Ablauf einer vorgebbaren Zeitspanne automatisch gelöscht wird.

5. Verfahren nach Anspruch 4,
**dadurch gekennzeichnet,**
**dass** der Ablauf der Zeitspanne durch ein dem rufenden Teilnehmer (Tln-A) zugeordnetes Endgerät überwacht wird.

6. Verfahren nach einem der vorhergehenden Ansprüche,
**dadurch gekennzeichnet,**
**dass** in Fällen, in denen der rufende Teilnehmer (Tln-A) zum Zeitpunkt der Rückrufausführung durch den gerufenen Teilnehmer (Tln-B) nicht am Netzwerk (IP-N) registriert ist, der Rückrufauftrag an eine dem rufenden Teilnehmer (Tln-A) zugeordnete Stellvertretereinrichtung (ST-A) übermittelt wird.

7. Verfahren nach Anspruch 6,
**dadurch gekennzeichnet,**
**dass** in diesen Fällen der Ablauf der Zeitspanne durch die dem rufenden Teilnehmer (Tln-A) zugeordnete Stellvertretereinrichtung (ST-A) überwacht wird.

8. Verfahren nach einem der vorhergehenden Ansprüche,
**dadurch gekennzeichnet,**
**dass** mehreren Teilnehmern eine gemeinsame Stellvertretereinrichtung (ST-A, ST-B) zugeordnet wird.

9. Verfahren nach einem der vorhergehenden Ansprüche,
**dadurch gekennzeichnet,**
**dass** die Registrierung eines Teilnehmers (Tln-A, Tln-B) durch einen dem jeweiligen Teilnehmer (Tln-A, Tln-B) zugeordneten Gatekeeper (GK-A, GK-B) überwacht wird.

10. Verfahren nach einem der vorhergehenden Ansprüche,
**dadurch gekennzeichnet,**
**dass** eine Datenübermittlung über das Netzwerk (IP-N) mittels der an sich bekannten Protokolle H.225 und H.323 der ITU realisiert wird.

11. Verfahren nach Anspruch 10,
**dadurch gekennzeichnet,**
**dass** der Rückrufauftrag mittels auf dem an sich bekannten Protokoll H.450.9 der ITU basierenden Meldungen realisiert wird.

12. Verfahren nach einem der Ansprüche 1 bis 9,
**dadurch gekennzeichnet,**
**dass** eine Datenübermittlung über das Netzwerk (IP-N) mittels des an sich bekannten SIP-Protokolls realisiert wird.

## Claims

1. Method for an automatic callback in a packet-oriented network (IP-N)
wherein in cases where a called subscriber (Tln-B) is not registered on the network (IP-N) a callback request from the calling subscriber (Tln-A) is automatically transmitted to a deputizing device (ST-B) that is located in the network (IP-N) and assigned to the called subscriber (Tln-B) and is stored by that device, and
wherein as soon as the called subscriber (Tln-B) registers on the network (IP-N) the callback request is transmitted to the called subscriber (Tln-B) and executed by that subscriber.

2. Method for an automatic callback in a packet-oriented network (IP-N)
wherein in cases where a called subscriber (Tln-B) is registered on the network (IP-N) when a callback request is activated by a calling subscriber (Tln-A) but de-registers from the network (IP-N) before the callback is executed, the callback request will automatically be stored in the network (IP-N), and
wherein as soon as the called subscriber (Tln-B) registers on the network (IP-N) the callback request will be transmitted to the called subscriber (Tln-B) and executed by that subscriber.

3. Method according to claim 1 or 2
**characterised in that**
the callback request is stored in a separate database (DB-B) and transmitted from this to the called subscriber (Tln-B).

4. Method according to one of the claims 1 to 3
**characterised in that**
the callback request is automatically cancelled on expiration of a period of time that can be pre-specified.

5. Method according to claim 4
**characterised in that**
the expiration of the period of time is monitored by a terminal assigned to the calling subscriber (Tln-A).

6. Method according to one of the preceding claims
**characterised in that**
in cases where the calling subscriber (Tln-A) is not registered on the network (IP-N) when the called subscriber (Tln-B) executes the callback, the callback request will be transmitted to a deputizing device (ST-A) assigned to the calling subscriber (Tln-A).

7. Method according to claim 6
**characterised in that**
in these cases the expiration of the period of time is monitored by the deputizing device (ST-A) assigned to the calling subscriber (Tln-A).

8. Method according to one of the preceding claims
**characterised in that**
a common deputizing device (ST-A, ST-B) is assigned to several subscribers.

9. Method according to one of the preceding claims
**characterised in that**
the registering of a subscriber (Tln-A, Tln-B) is monitored by a gatekeeper (GK-A, GK-B) assigned to the respective subscriber (Tln-A, Tln-B).

10. Method according to one of the preceding claims
**characterised in that**
a transmission of data over the network (IP-N) is implemented by means of the H.225 and H.323 protocols known per se of the ITU.

11. Method according to claim 10
**characterised in that**
the callback request is implemented by means of messages based on the H.450.9 protocol known per se of the ITU.

12. Method according to one of the claims 1 to 9
**characterised in that**
a transmission of data over the network (IP-N) is implemented by means of the SIP protocol known per se.

## Revendications

1. Procédé de rappel automatique dans un réseau orienté paquets (IP-N), dans lequel
- dans les cas où un abonné appelé (Tln-B) n'est pas enregistré sur le réseau (IP-N), une requête de rappel est automatiquement transmise de l'abonné appelant (Tln-A) à un dispositif de substitution (ST-B) situé dans le réseau (IP-N) et affecté à l'abonné appelé (Tln-B) et est mis en mémoire par ledit dispositif et,
- dès que l'abonné appelé (Tln-B) s'enregistre sur le réseau (IP-N), la requête de rappel est transmise à l'abonné appelé (Tln-B) et exécutée par celui-ci.

2. Procédé de rappel automatique dans un réseau orienté paquets (IP-N), dans lequel
- dans les cas où un abonné appelé (Tln-B), au moment d'une activation d'une requête de rappel par un abonné appelant (Tln-A), est enregistré sur le réseau (IP-N), mais se déconnecte du réseau (IP-N) avant une exécution du rappel, la requête de rappel est automatiquement mise en mémoire dans le réseau (IP-N) et
- dès que l'abonné appelé (Tln-B) s'enregistre sur le réseau (IP-N), la requête de rappel est transmise à l'abonné appelé (Tln-B) et exécutée par celui-ci.

3. Procédé selon la revendication 1 ou 2, **caractérisé en ce que** la requête de rappel est mise en mémoire dans une base de données séparée (DB-B) et est transmise par celle-ci à l'abonné appelé (Tln-B).

4. Procédé selon l'une des revendications 1 à 3, **caractérisé en ce que** la requête de rappel est effacée automatiquement après l'expiration d'un laps de temps prédéterminable.

5. Procédé selon la revendication 4, **caractérisé en ce que** l'expiration du laps de temps est surveillée par un terminal affecté à l'abonné appelant (Tln-A).

6. Procédé selon l'une des revendications précédentes, **caractérisé en ce que**, dans les cas dans lesquels l'abonné appelant (Tln-A), au moment de l'exécution du rappel par l'abonné appelé (Tln-B), n'est pas enregistré sur le réseau (IP-N), la requête de rappel est transmise à un dispositif de substitution (ST-A) affecté à l'abonné appelant (Tln-A).

7. Procédé selon la revendication 6, **caractérisé en ce que**, dans ces cas, l'expiration du laps de temps est surveillée par le dispositif de substitution (ST-A) affecté à l'abonné appelant (Tln-A).

8. Procédé selon l'une des revendications précédentes, **caractérisé en ce qu'**un dispositif de substitution commun (ST-A, ST-B) est affecté à plusieurs abonnés.

9. Procédé selon l'une des revendications précédentes, **caractérisé en ce que** l'enregistrement d'un abonné (Tln-A, Tln-B) est surveillé par un portier (GK-A, GK-B) affecté à l'abonné respectif (Tln-A, Tln-B).

10. Procédé selon l'une des revendications précédentes, **caractérisé en ce qu'**une transmission de données est réalisée via le réseau (IP-N) au moyen des protocoles H.225 et H.323 de l'UIT, en soi connus.

11. Procédé selon la revendication 10, **caractérisé en ce que** la requête de rappel est réalisée au moyen de messages basés sur le protocole H.450.9 de l'UIT, en soi connu.

12. Procédé selon l'une des revendications 1 à 9, **caractérisé en ce qu'**une transmission de données est réalisée via le réseau (IP-N) au moyen du protocole SIP en soi connu.
